(19) Europäisches Patentamt

European Patent Office

Office européen des brevets

(11) **EP 1 520 093 B1**

(12) **EUROPÄISCHE PATENTSCHRIFT**

(45) Veröffentlichungstag und Bekanntmachung des Hinweises auf die Patenterteilung:
**18.10.2006 Patentblatt 2006/42**

(21) Anmeldenummer: **03737916.1**

(22) Anmeldetag: **28.05.2003**

(51) Int Cl.:
*F02D 41/24* *(2006.01)*  *F02D 41/40* *(2006.01)*

(86) Internationale Anmeldenummer:
**PCT/DE2003/001738**

(87) Internationale Veröffentlichungsnummer:
**WO 2004/003366 (08.01.2004 Gazette 2004/02)**

(54) **VERFAHREN ZUR STEUERUNG EINES KRAFTSTOFFZUMESSSYSTEMS EINER BRENNKRAFTMASCHINE**

METHOD FOR CONTROLLING A FUEL METERING SYSTEM OF AN INTERNAL COMBUSTION ENGINE

PROCEDE POUR COMMANDER UN SYSTEME DOSEUR DE CARBURANT SUR UN MOTEUR A COMBUSTION INTERNE

(84) Benannte Vertragsstaaten:
**DE FR IT**

(30) Priorität: **28.06.2002 DE 10229019**

(43) Veröffentlichungstag der Anmeldung:
**06.04.2005 Patentblatt 2005/14**

(73) Patentinhaber: **ROBERT BOSCH GMBH**
**70442 Stuttgart (DE)**

(72) Erfinder: **MATTES, Patrick**
**70569 Stuttgart (DE)**

(56) Entgegenhaltungen:
**DE-A- 19 945 618    US-A- 5 070 836**
**US-A- 6 112 720**

## Beschreibung

### Stand der Technik

Die Erfindung betrifft ein Verfahren zur Steuerung eines Kraftstoffzumeßsystems einer Brennkraftmaschine nach dem Oberbegriff des Anspruchs 1.

Ein Verfahren und eine Vorrichtung zur Steuerung eines Kraftstoffzumeßsystems einer Brennkraftmaschine geht beispielsweise aus der DE 199 45 618 A1 hervor. Bei diesem bekannten Verfahren legt die Ansteuerdauer wenigstens eines elektrisch betätigten Ventils die einzuspritzende Kraftstoffmenge fest. In bestimmten Betriebszuständen wird die Mindestansteuerdauer ermittelt, bei der gerade Kraftstoff eingespritzt wird. Ausgehend von einem Startwert wird die Ansteuerdauer erhöht oder verringert. Die Ansteuerdauer, bei der eine Änderung eines Signals auftritt, wird als Mindestansteuerdauer gespeichert. Als Signal wird eine die Drehungsgleichförmigkeit charakterisierende Größe, ein Ausgangssignal einer Lambdasonde oder ein Ausgangssignal einer Ionenstromsonde verwendet. Durch dieses Verfahren ist eine Einspritzmengendrift über die Lebensdauer der Einspritzdüse im Bereich der Voreinspritzung möglich.

Aus der nicht vorveröffentlichten DE 102 15 610 geht ein System und ein Verfahren zum Korrigieren des Einspritzverhaltens von Injektoren hervor bei dem zur Steigerung der Gutausbringung ein Injektormengenabgleich in mehreren Prüfpunkten, vorzugsweise in 4 Prüfpunkten, nämlich bei der Voreinspritzung im Leerlaufbetrieb, am Emissionspunkt und im Vollastbetrieb vorgenommen wird.

Dieser Injektormengenabgleich ist erforderlich, da derartige Injektoren aufgrund ihrer mechanischen Fertigungstoleranzen unterschiedliche Mengenkennfelder besitzen. Unter einem Mengenkennfeld ist die Beziehung zwischen Einspritzmenge, Rail-Druck und Ansteuerzeit zu verstehen. Dies hat zur Folge, daß trotz elektrisch definierter Steuerung jeder einzelne Injektor den Verbrennungsraum mit unterschiedlichen Kraftstoffmengen füllt.

Um nämlich einen möglichst geringen Kraftstoffverbrauch unter Einhaltung strenger Abgasnormen zu erreichen, dürfen die Injektoren im Betrieb nur sehr geringe Toleranzen im Hinblick auf die Einspritzmenge aufweisen. Diese geforderten geringen Toleranzen können aufgrund der mechanischen Fertigungstoleranzen nicht eingehalten werden. Um dennoch eine definierte Einspritzmenge bei den Injektoren sicherzustellen, werden die Injektoren nach der Fertigung an charakteristischen Arbeitspunkten oder Prüfpunkten auf ihre Einspritzmenge vermessen und in Klassen eingeordnet. Die jeweilige Klasse muß im Betrieb der Brennkraftmaschine dem Motor-Steuergerät bekannt sein, so daß die Steuerung an die speziellen Merkmale der Klasse injektorspezifisch angepaßt werden kann. Die Klasseninformationen werden auf dem Injektor gespeichert, beispielsweise durch verschiedene Codierung, wie etwa Barcode, durch Widerstände am Injektor oder durch Klartext auf dem Injektor.

Darüber hinaus ist es möglich, daß in den Injektoren elektronische Speichermöglichkeiten vorgesehen sind, in welchen beispielsweise die Klasseninformation gespeichert ist. Das Steuergerät kann diese Werte über eine Schnittstelle aus dem Injektor auslesen und im Folgebetrieb nutzen.

Bei derartigen Common-Rail-Injektoren ist nun über die Lebensdauer eine Mengendrift zu beobachten, die individuell bei jedem Injektor unterschiedlich ausgeprägt ist und beispielsweise vom Lastprofil oder vom Injektortyp abhängt. Diese Mengendrift wirkt sich nachteilig in bezug auf einen geringen Kraftstoffverbrauch, auf die Einhaltung strenger Abgasnormen wie auch nachteilig in bezug auf beispielsweise den Geräuschpegel der Brennkraftmaschine aus. Eine Korrektur der Einspritzmengendrift über die Lebensdauer der Injektoren ist bisher nur im Voreinspritz-Plateau durch ein aus der DE 199 45 618 A1 hervorgehendes Verfahren möglich. Mengendriften in anderen Arbeitspunkten können dagegen, wenn überhaupt, nur sehr beschränkt kompensiert werden.

### Aufgabe der Erfindung

Der Erfindung liegt daher das Problem zugrunde ein Verfahren anzugeben, bei welchem eine Mengenkorrektur, insbesondere eine Korrektur der Mengendrift über die Lebensdauer eines Piezo-Common-Rail-Injektors in Arbeitspunkten außerhalb des Bereichs der Voreinspritzung möglich ist.

### Vorteile der Erfindung

Diese Aufgabe wird bei einem Verfahren zur Steuerung von Injektoren eines Kraftstoffzumeßsystems einer Brennkraftmaschine der eingangs beschriebenen Art durch die Merkmale des Anspruchs 1 gelöst.

Grundidee der Erfindung ist es, aus der Differenz zwischen der Ansteuerdauer, bei der eine Änderung des Signals auftritt und der gespeicherten Mindestansteuerdauer mittels Übertragungsfunktionen, welche den Zusammenhang zwischen der Mindestansteuerdauer und jeweils der Ansteuerdauer an mehreren Prüfpunkten des Injektors und/ oder den Zusammenhang zwischen den Ansteuerdauern an unterschiedlichen Prüfpunkten des Injektors festlegen, Korrekturwerte für das Mengenfeld des Injektors zu bestimmen. Es wird daher gewissermaßen ausgehend vom Voreinspritzbereich, in dem Mengendrifts erfaßt und korrigiert werden können, auf das gesamte Mengenkennfeld des Injektors mit Hilfe von Übertragungsfunktionen geschlossen.

Diese Übertragungsfunktionen werden vorzugsweise ihrerseits während des Injektormengenabgleichs in den Prüfpunkten bestimmt.

Eine vorteilhafte Ausführungsform sieht vor, daß die Übertragungsfunktionen auf dem Injektor gespeichert werden, der Injektor also auch mit diesen Übertragungsfunktionen kodiert wird.

Gemäß einer anderen vorteilhaften Ausführungsform werden die Korrekturwerte in einem Motor-Steuergerät gespeichert.

Zeichnung

Weitere Vorteile und Merkmale der Erfindung sind Gegenstand der nachfolgenden Beschreibung sowie der zeichnerischen Darstellung einiger Ausführungsbeispiele.

In der Zeichnung zeigen:

Fig. 1 eine schematische Darstellung eines Teils eines aus dem Stand der Technik bekannten Common-Rail-Systems, bei dem das erfindungsgemäße Verfahren zur Anwendung kommt und

Fig. 2 schematisch die Einspritzmenge über der Ansteuerdauer bei unterschiedlichen Einspritzdrücken zur Erläuterung des erfindungsgemäßen Verfahrens.

Beschreibung der Ausführungsbeispiele

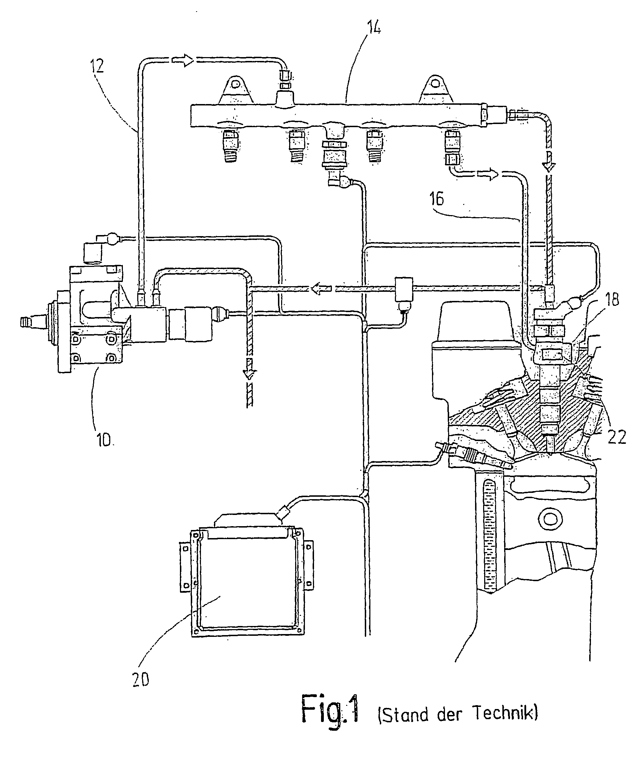

In Fig. 1 ist der Hochdruckteil eines Common-Rail-Speichereinspritzsystems dargestellt, wobei im folgenden lediglich die Hauptkomponenten und solche Komponenten näher erläutert werden, welche für das Verständnis vorliegender Erfindung wesentlich sind.

Die Anordnung umfaßt eine Hochdruckpumpe 10, welche über eine Hochdruckleitung 12 mit dem Hochdruckspeicher ("Rail") 14 in Verbindung steht. Der Hochdruckspeicher 14 ist über weitere Hochdruckleitungen mit Injektoren 18 verbunden. In der vorliegenden Darstellung sind eine Hochdruckleitung 16 und ein Injektor 18 gezeigt. Der Injektor 18 ist in eine Brennkraftmaschine eines Kraftfahrzeugs eingebaut. Das dargestellte System wird von einem Motor-Steuergerät 20 gesteuert. Durch das Motor-Steuergerät 20 erfolgt insbesondere eine Steuerung des Injektors 18.

An dem Injektor 18 ist eine Einrichtung 22 zum Speichern von Informationen vorgesehen, welche sich individuell auf den Injektor 18 beziehen. Die Informationen, welche in der Einrichtung 22 gespeichert sind, können von dem Motor-Steuergerät 20 berücksichtigt werden, so daß eine individuelle Steuerung eines jeden Injektors 18 erfolgen kann. Vorzugsweise handelt es sich bei den Informationen um Korrekturwerte für das Mengenkennfeld des Injektors 18. Die Einrichtung 22 zum Speichern der Informationen kann beispielsweise als Datenspeicher oder auch als einer oder mehrere elektrische Widerstände, als Barcode, durch alphanumerische Verschlüsselung oder dergleichen oder auch durch eine an dem Injektor 18 angeordnete integrierte Halbleiterschaltung realisiert sein. Das Motor-Steuergerät 20 kann ebenfalls eine integrierte Halbleiterschaltung zur Auswertung der in der Einrichtung 22 gespeicherten Informationen aufweisen.

Die von jedem Injektor 18 zugemessene Einspritzmenge ist in Abhängigkeit von dem Raildruck in einem in dem Motor-Steuergerät 20 gespeicherten Kennfeld festgelegt, wobei das Kennfeld aufgrund mehrerer Prüfpunkte (Voreinspritzung, Leerlauf, Emissionspunkt, Vollast), die unterschiedlichen Betriebszuständen der Brennkraftmaschine entsprechen, ermittelt wird. An diesen Prüfpunkten wird jeweils ein Mengenabgleich auf an sich bekannte und aus der DE 102 15 610 hervorgehenden Weise vorgenommen. Die Einspritzmenge wird nun durch die Einspritzdauer des Injektors 18 bestimmt, das heißt die Zeit, die zwischen dem Einspritzbeginn und dem Einspritzende vergeht.

Um eine Kraftstoffmengenzumessung im gesamten Betriebsbereich der Brennkraftmaschine und des Injektors 18 zu ermöglichen, werden die Abgleichwerte zwischen den durch die Prüfpunkte definierten Stützstellen interpoliert.

Über die Lebensdauer der Injektoren 18 ist nun eine Mengendrift dahingehend zu beobachten, daß sich über die Lebensdauer der Injektoren 18 die ursprünglich durch Festlegung des Einspritzbeginns und der Einspritzdauer festgelegte Einspritzmenge verändert.

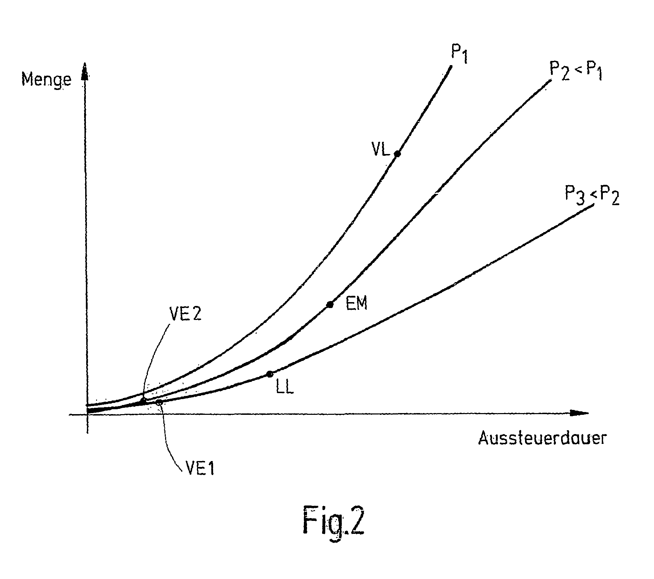

Um diese Mengendrift zu kompensieren, wird nun bei einem Common-Rail-Injektor, beispielsweise bei einem Common-Rail-Injektor mit voll-ballistischem Kennfeld ohne VE(voreinspritzungs)-Plateau, welches schematisch in Fig. 2 dargestellt ist, ein Injektormengenabgleich (IMA) beispielsweise an den fünf vorerwähnten Prüfpunkten LL (Leerlauf), VE1 (Voreinspritzung 1), EM (Emissionspunkt), VE2 (Voreinspritzung 2) und VL (Vollast) vorgenommen. Zusätzlich werden Übertragungsfunktionen Ü1 = f (VE1, LL), Ü2 = f (VE2, EM) und Ü3 = f (EM, VL) ermittelt.

Um nun eine Mengenkorrektur über die Lebensdauer des Injektors 18 zu realisieren, wird daraufhin die Mindestansteuerdauer in zwei Betriebspunkten VE1 und VE2 ermittelt, bei der gerade Kraftstoff eingespritzt wird, wobei jeweils ausgehend von einem Startwert die Ansteuerdauer vergrößert oder verringert wird, und die Ansteuerdauer, bei der eine Änderung eines Signals auftritt, als Mindestansteuerdauer VE1' bzw. VE2' gespeichert wird.. Sodann werden

jeweils die Differenzen Delta1 (VE1, VE1') bzw. Delta2 (VE2, VE2') bestimmt. Aus diesen Differenzen werden nun mit Hilfe der Übertragungsfunktionen Ü1, Ü2, Ü3, welche den Zusammenhang zwischen der Mindesteinspritzdauer VE1 und der Einspritzdauer im Leerlaufbetrieb LL, den Zusammenhang zwischen der zweiten Mindesteinspritzdauer und der Einspritzdauer im Emissionspunkt EM sowie den Zusammenhang zwischen unterschiedlichen Betriebspunkten, beispielsweise der Einspritzdauer im Emissionspunkt EM und der Einspritzdauer im Vollastbetrieb VL, Korrekturwerte für das Mengenkennfeld des Injektors bestimmt und gespeichert:

```
LL' = f (LL, Delta1, Ü1), EM' = f (EM, Delta2, Ü2) und VL' = f (VL, EM', Ü3).
```

Es wird so gewissermaßen von der sogenannten Nullmengenkorrektur, das heißt der Korrektur der Mindesteinspritzdauer oder Mindestansteuerdauern VE1, VE2 mit Hilfe der Übertragungsfunktionen Ü1, Ü2, Ü3 auf die Einspritzdauern in den weiteren Prüfpunkten LL', EM', VL' des Mengenkennfelds des Injektors 18 geschlossen.

Diese Übertragungsfunktionen können während des Injektormengenabgleichs oder auch unabhängig vom Injektormengenabgleich ermittelt werden.

Die Übertragungsfunktionen Ü1, Ü2, Ü3 können entweder auf dem Injektor 18 gespeichert, das heißt der Injektor 15 mit den Übertragungsfunktionen kodiert werden oder als Kennlinie im Motor-Steuergerät 20 abgelegt werden. Vorteilhafterweise werden Korrekturen der Kennfeldpunkte LL' = f (LL, Delta1, Ü1), EM' = f (EM, Delta2, Ü2) und VL' = f (VL, EM', Ü3) bei jeder Nullmengenkorrektur vorgenommen. Hierdurch wird ein geschlossener Mengenregelkreis realisiert.

## Patentansprüche

1.  Verfahren zur Steuerung eines Kraftstoffzumesssystems einer Brennkraftmaschine, bei dem eine Ansteuerdauer wenigstens eines elektrisch betätigten Injektors (18) die einzuspritzende Kraftstoffmenge festlegt, wobei in bestimmten Betriebszuständen eine Nullmengenkorrektur erfolgt, bei der die Mindestansteuerdauer ermittelt wird, bei der gerade Kraftstoff eingespritzt wird, wobei ausgehend von einem Startwert die Ansteuerdauer erhöht oder verringert wird, und die Ansteuerdauer, bei der eine Änderung eines Signals auftritt, als Mindestansteuerdauer gespeichert wird, **dadurch gekennzeichnet, dass** ausgehend von der Nullmengenkorrektur und wenigstens einer Übertragungsfunktion (Ü1, Ü2, Ü3), welche den Zusammenhang zwischen der Mindestansteuerdauer und Ansteuerdauern an Prüfpunkten (VE1, VE2, LL, EM, VL) des Injektors (18) und/oder den Zusammenhang zwischen den Ansteuerdauern an unterschiedlichen Prüfpunkten des Injektors (18) charakterisiert, die Ansteuerdauern an den Prüfpunkten des Mengenkennfeldes des Injektors (18) ermittelt werden.

2.  Verfahren nach Anspruch 1, **dadurch gekennzeichnet, dass** die wenigstens eine Übertragungsfunktion (Ü1, Ü2, Ü3) während eines Injektormengenabgleichs (IMA) bestimmt wird.

3.  Verfahren nach Anspruch 1 oder 2, **dadurch gekennzeichnet, dass** die wenigstens eine Übertragungsfunktion (Ü1, Ü2, Ü3) auf dem Injektor (18) gespeichert wird.

4.  Verfahren nach Anspruch 1, **dadurch gekennzeichnet, dass** die wenigstens eine Übertragungsfunktion (Ü1, Ü2, Ü3) in einem Motor-Steuergerät (20) gespeichert wird.

## Claims

1.  Method for controlling a fuel metering system of an internal combustion engine, in which an actuation period of at least one electrically activated injector (18) defines the quantity of fuel to be injected, a zero quantity correction taking place in specific operating states, during which correction the minimum actuation period during which fuel is actually injected is determined, the actuation period being increased or reduced starting from a start value, and the actuation period at which a change in a signal occurs being stored as a minimum actuation period, **characterized in that** the actuation periods are determined at the test points of the quantity characteristic diagram of the injector (18) on the basis of the zero quantity correction and at least one transmission function (Ü1, Ü2, Ü3) which characterizes the relationship between the minimum actuation period and actuation periods at test points (VE1, VE2, LL, EM, VL) of the injector (18) and/or the relationship between the actuation periods at different test points of the injector (18).

**2.** Method according to Claim 1, **characterized in that** the at least one transmission function (Ü1, Ü2, Ü3) is determined during an injector quantity adjustment (IQA).

**3.** Method according to Claim 1 or 2, **characterized in that** the at least one transmission function (Ü1, Ü2, Ü3) is stored on the injector (18).

**4.** Method according to Claim 1, **characterized in that** the at least one transmission function (Ü1, Ü2, Ü3) is stored in an engine controller (20).

**Revendications**

**1.** Procédé de commande d'un système de dosage de carburant dans un moteur à combustion selon lequel une durée d'excitation d'au moins un injecteur à actionnement électrique (18) détermine la quantité de carburant à injecter, on effectue dans certaines conditions de fonctionnement une correction de quantité nulle qui détermine la durée d'excitation minimale pour laquelle on injecte à peine de carburant et à partir d'une valeur de départ, on augmente ou on diminue la durée d'excitation et on enregistre comme durée d'excitation minimale, la durée d'excitation provoquant un changement d'un signal,
**caractérisé en ce qu'**
à partir de la correction de quantité nulle et d'au moins une fonction de transmission (Ü1, Ü2, Ü3), qui caractérise la relation entre la durée d'excitation minimale et les durées d'excitation sur les points d'essai (VE1, VE2, LL, EM, VL) de l'injecteur (18) et/ou la relation entre les durées d'excitation sur différents points d'essai de l'injecteur (18), on détermine les durées d'excitation sur les points d'essai du champ de caractéristiques du débit de l'injecteur (18).

**2.** Procédé selon la revendication 1,
**caractérisé en ce que**
l'au moins une fonction de transmission (Ü1, Ü2, Ü3) est définie pendant un ajustage du débit (IMA) de l'injecteur.

**3.** Procédé selon la revendication 1 ou 2,
**caractérisé en ce que**
l'au moins une fonction de transmission (Ü1, Ü2, Ü3) est enregistrée sur l'injecteur (18).

**4.** Procédé selon la revendication 1,
**caractérisé en ce que**
l'au moins une fonction de transmission (Ü1, Ü2, Ü3) est enregistrée dans un appareil de commande de moteur (20).

Fig.1 (Stand der Technik)

Fig.2